# EUROPEAN PATENT APPLICATION

(11) **EP 4 397 703 A1**
(43) Date of publication of application: **10.07.2024**
(21) Application number: 22864283.1
(22) Date of filing: 18.08.2022
(51) Int. Cl.: C08J 9/08, B01D 53/14, C08G 59/50

(54) **EPOXY RESIN FOAM, CARBON DIOXIDE ABSORBENT, METHOD FOR PRODUCING EPOXY RESIN FOAM, MULTILAYER STRUCTURE AND METHOD FOR PRODUCING SAME**

(30) Priority: 02.09.2021 JP 2021143143; 22.04.2022 JP 2022070863
(71) Applicant: MITSUBISHI GAS CHEMICAL COMPANY, INC., Chiyoda-ku Tokyo 100-8324 (JP)
(72) Inventor: KOUNO, Kazuki, Hiratsuka-shi, Kanagawa 254-0016 (JP); KAWASHIMA, Yuki, Hiratsuka-shi, Kanagawa 254-0016 (JP); IKEUCHI, Kousuke, Hiratsuka-shi, Kanagawa 254-0016 (JP)
(74) Representative: Gille Hrabal Partnerschaftsgesellschaft mbB Patentanwälte
(86) International application number: PCT/JP2022/031250
(87) International publication number: WO 2023/032698

(57) **Abstract**

An epoxy resin foam (D) obtained by foaming an epoxy resin composition (C) including an amine curing agent (A) and an epoxy resin (B), wherein the amine curing agent (A) includes a reaction product (a2) of an amine compound including a cyclic amine compound (a1) and carbon dioxide, and the cyclic amine compound (a1) has an amino group bonded to a primary carbon atom.

## Description

### Technical Field

The present invention relates to an epoxy resin foam, a carbon dioxide absorbent, a method for producing an epoxy resin foam, a multilayer structure and a method for producing the same.

### Background Art

Epoxy resins, for example, have excellent heat resistance, chemical resistance, close contact, adhesiveness, corrosion resistance, electrical insulation properties, and flexibility, and are widely used in various fields such as paint, civil engineering, electrical materials, and adhesive applications. In addition, it has been considered to add functions such as heat insulation, sound insulation, and light weight to epoxy resins by foaming epoxy resins.

The technology related to epoxy resin foams can be found, for example, in Patent Literatures 1 and 2.

Patent Literature 1 discloses a foamable epoxy resin composition comprising, based on 100 parts by weight of liquid epoxy resin (A) having one or more epoxy groups per molecule, (B) 10 to 200 parts by weight of a methacrylic resin having a median particle size of 300 µm or less, (C) 10 to 200 parts by weight of a polyethylene resin having a melt index of 100 or less and an median particle size of 300 µm or less, (D) 0.5 to 20 parts by weight of a latent curing agent for epoxy resin, (E) 0.5 to 20 parts by weight of a blowing agent which releases decomposition gas at a temperature of 100 to 220°C and (F) 0.05 to 5 parts by weight of a surfactant. Patent Literature 1 discloses that the foamable epoxy resin composition can provide a light weight, highly stiff and dense foam and the composition adheres firmly to oily surfaces of metal, and also has good heat resistance.

Patent Literature 2 discloses a method for producing an epoxy resin foam, comprising, when curing an epoxy resin composition prepared by mixing an epoxy resin (A) and a curing agent (B), forming a low molecular weight compound by reaction between the epoxy resin (A) and the curing agent (B), and vaporizing the low molecular weight compound with reaction heat to cause foaming. Patent Literature 2 discloses that an epoxy resin foam having a uniform and dense bubble structure in an atmosphere from near the freezing point to room temperature can be easily produced on-site by the method without adding a blowing agent or externally heating.

### Citation List

### Patent Literature

PTL1: JP 5-194780 A
PTL2: JP 2006-225438 A

### Summary of Invention

### Technical Problem

In Patent Literatures 1 and 2, the carbon dioxide absorption capacity of epoxy resin foams has not been considered.

The present invention has been made in view of the above circumstances and provides an epoxy resin foam with improved carbon dioxide absorption capacity.

### Solution to Problem

The present inventors have conducted intensive studies to solve the above problem. As a result, the present inventors have found that carbon dioxide absorption capacity of an epoxy resin foam can be improved when, in an epoxy resin foam obtained by foaming an epoxy resin composition comprising an amine curing agent and an epoxy resin, the amine curing agent comprises a reaction product of an amine compound comprising a cyclic amine compound and carbon dioxide, and the cyclic amine compound has an amino group bonded to a primary carbon atom; and have completed the present invention.

Accordingly, the present invention provides the following epoxy resin foam, carbon dioxide absorbent, method for producing an epoxy resin foam, multilayer structure and method for producing the same.

[1] An epoxy resin foam (D) obtained by foaming an epoxy resin composition (C) comprising an amine curing agent (A) and an epoxy resin (B),
   wherein the amine curing agent (A) comprises a reaction product (a2) of an amine compound comprising a cyclic amine compound (a1) and carbon dioxide, and the cyclic amine compound (a1) has an amino group bonded to a primary carbon atom.
[2] The epoxy resin foam according to [1] above, wherein a percentage increase of a mass of the amine compound calculated by the following equation when the amine compound is left to stand in an air environment of 23°C and 50% RH for a week is 15% by mass or more and 50% by mass or less:
   percentage increase of mass of amine compound [% by mass] = 100 × amount of increase of mass of amine compound (g) / (mass of amine compound (g) + amount of increase of mass of amine compound (g)).
[3] The epoxy resin foam according to [1] or [2] above, wherein an amount of carbon dioxide absorbed by the epoxy resin foam (D) per unit volume is 0.003 g/cm³ or more.
[4] The epoxy resin foam according to any one of [1] to [3] above, wherein the epoxy resin foam (D) has a density of 0.01 g/cm³ or more and 0.80 g/cm³ or less.
[5] The epoxy resin foam according to any one of [1] to [4] above, wherein the epoxy resin (B) comprises an epoxy resin having an aromatic ring or an alicyclic structure in a molecule thereof.
[6] The epoxy resin foam according to any one of [1] to [5] above, wherein the cyclic amine compound (a1) comprises a compound represented by the following formula (1): 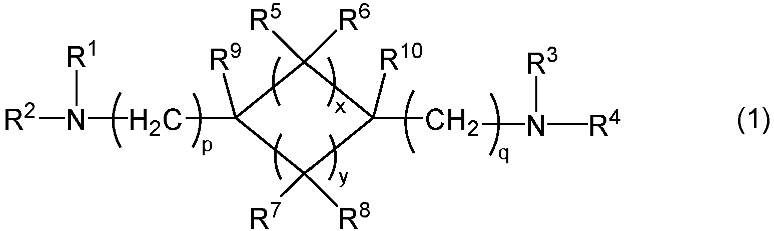 wherein R¹ to R⁴ each independently represent a hydrogen atom, or a hydrocarbon group having 1 or more and 10 or less carbon atoms and optionally having at least one substituent selected from the group consisting of an amino group, a cyano group and a phenyl group; R⁵ to R¹⁰ each independently represent a hydrogen atom or a hydrocarbon group having 1 or more and 4 or less carbon atoms; x and y each independently represent an integer of 0 or more and 6 or less, and x + y is 1 or more and 6 or less; and p and q are each independently an integer of 0 or more and 4 or less, and at least one of p and q is 1 or more.
[7] The epoxy resin foam according to any one of [1] to [6] above, wherein the cyclic amine compound (a1) has 2 or more and 6 or less amino groups.
[8] The epoxy resin foam according to any one of [1] to [7] above, wherein the cyclic structure of the cyclic amine compound (a1) comprises at least one selected from the group consisting of a five-membered ring and a six-membered ring.
[9] The epoxy resin foam according to any one of [1] to [8] above, wherein the cyclic amine compound (a1) comprises at least one selected from the group consisting of bis(aminomethyl)cyclohexane and derivatives thereof, limonene diamine and derivatives thereof, and isophorone diamine and derivatives thereof.
[10] A carbon dioxide absorbent comprising the epoxy resin foam (D) according to any one of [1] to [9] above.
[11] A method for producing an epoxy resin foam, comprising a step of foaming an epoxy resin composition (C) comprising an amine curing agent (A) and an epoxy resin (B),
   wherein the amine curing agent (A) comprises a reaction product (a2) of an amine compound comprising a cyclic amine compound (a1) and carbon dioxide, and the cyclic amine compound (a1) has an amino group bonded to a primary carbon atom.
[12] The method for producing an epoxy resin foam according to [11] above, further comprising a step of obtaining the reaction product (a2) by contacting the amine compound with a gas having a concentration of carbon dioxide of 0.01% by volume or more and 10% by volume or less to react the amine compound with carbon dioxide, before the step of foaming the epoxy resin composition (C).
[13] The method for producing an epoxy resin foam according to [11] or [12] above, wherein a percentage increase of a mass of the amine compound calculated by the following equation when the amine compound is left to stand in an air environment of 23°C and 50% RH for a week is 15% by mass or more and 50% by mass or less:
   percentage increase of mass of amine compound [% by mass] = 100 × amount of increase of mass of amine compound (g) / (mass of amine compound (g) + amount of increase of mass of amine compound (g)).
[14] A multilayer structure comprising an outer layer on at least one surface of the epoxy resin foam according to any one of [1] to [9] above.
[15] The multilayer structure according to [14] above, comprising an outer layer (Ia), a core layer consisting of the epoxy resin foam, and an outer layer (Ib), in the order mentioned.
[16] The multilayer structure according to [15] above, wherein at least one of the outer layer (Ia) and the outer layer (Ib) is made of a fiber-reinforced composite material comprising a matrix resin and a reinforcing fiber.
[17] A method for producing the multilayer structure according to [15] or [16] above, comprising at least one step selected from the following step (i) to step (iii):
   step (i): preparing a laminate (i) by laminating the outer layer (Ia) or a precursor thereof, a foamable layer (II) comprising the epoxy resin composition (C) comprising the amine curing agent (A) and the epoxy resin (B), and the outer layer (Ib) or a precursor thereof in the order mentioned, and then foaming the foamable layer (II);
   step (ii): preparing a laminate (ii) by laminating the outer layer (Ia) or a precursor thereof, the core layer, and the outer layer (Ib) or a precursor thereof in the order mentioned, and then integrating the outer layer (Ia) or a precursor thereof, the core layer, and the outer layer (Ib) or a precursor thereof; and
   step (iii): preparing a laminate (iii) by laminating and integrating the outer layer (Ia) or a precursor thereof and the core layer, and then laminating and integrating the laminate (iii) and the outer layer (Ib) or a precursor thereof.

### Advantageous Effect of Invention

The present invention provides an epoxy resin foam with improved carbon dioxide absorption capacity. The foam is also useful as a core material of a multilayer structure.

### Brief Description of Drawing

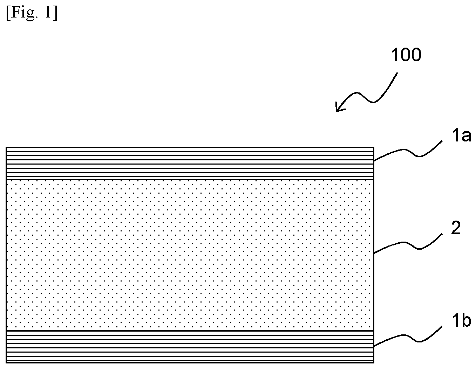

[Fig. 1] Fig. 1 is a schematic cross-sectional view illustrating an embodiment of the multilayer structure of the present invention.

### Description of Embodiments

Embodiments of the present invention (hereinafter simply referred to as "the present embodiment") will be described in detail. The following present embodiments illustrate the present invention and do not limit the present invention. The present invention may be practiced with modification within the gist of the present invention. In the present embodiments, preferred specifications may be optionally employed and combination of preferred specifications are more preferred. In the present embodiments, the term "XX to YY" means "XX or more and YY or less."

### [Epoxy resin foam]

The epoxy resin foam of the present invention is an epoxy resin foam (D) obtained by foaming an epoxy resin composition (C) comprising an amine curing agent (A) and an epoxy resin (B), and the amine curing agent (A) comprises a reaction product (a2) of an amine compound comprising a cyclic amine compound (a1) and carbon dioxide, and the cyclic amine compound (a1) has an amino group bonded to a primary carbon atom.

The epoxy resin foam of the present invention has improved carbon dioxide absorption capacity.

In the present embodiment, "improved carbon dioxide absorption capacity" means that the foam absorbs more carbon dioxide existing in air at low concentration (about 0.04% by volume). The "primary carbon atom" means a carbon atom bonded to a different carbon atom. "Repeated usability" means the retention rate of the amount of carbon dioxide absorbed in a cycle test of absorption and release of carbon dioxide.

The carbon dioxide absorption capacity of the epoxy resin foam (D) can be improved by using the amine curing agent (A) comprising a reaction product (a2) of an amine compound comprising a cyclic amine compound (a1) and carbon dioxide as a curing agent for curing the epoxy resin (B). The reason is assumed to be as follows although it is not clear.

First, by heating the epoxy resin composition (C), an amine compound comprising a cyclic amine compound (a1) and carbon dioxide are generated from the reaction product (a2). At that stage, the resulting carbon dioxide causes foaming of the epoxy resin composition (C) and the epoxy resin composition (C) is cured by the reaction between the amine compound generated and the epoxy resin (B) to give the epoxy resin foam (D).

More specifically, because the epoxy resin foam (D) has a porous foaming structure and thus has large surface area, and because the structure is formed by the release of carbon dioxide, the structure easily absorbs carbon dioxide.

Furthermore, the cyclic amine compound (a1) has an amino group bonded to a primary carbon atom. Such an amino group is less likely to cause steric hindrance, and thus carbon dioxide is easily absorbed.

The epoxy resin foam (D) can improve carbon dioxide absorption capacity for the above reasons.

### <Amine curing agent (A)>

The amine curing agent (A) comprises a reaction product (a2) of an amine compound comprising a cyclic amine compound (a1) and carbon dioxide.

The cyclic amine compound (a1) is an amine compound having a cyclic structure. Examples of cyclic structures in the cyclic amine compound (a1) include an alicyclic hydrocarbon structure, an aromatic hydrocarbon structure, and a heterocyclic structure with a heteroatom in the ring. It is preferable to include an alicyclic hydrocarbon structure in order to improve carbon dioxide release performance from the cyclic amine compound (a1).

In this regard, the alicyclic hydrocarbon structure in the present embodiment refers to a cyclic structure including a non-aromatic, saturated or unsaturated carbon and hydrogen, excluding a heterocyclic structure having a heteroatom in the ring. The heterocyclic structure means a heterocyclic structure containing a heteroatom in the ring.

The cyclic structure of the cyclic amine compound (a1) preferably has at least one selected from the group consisting of a five-membered ring and a six-membered ring, and more preferably a six-membered ring from the viewpoint of the improvement of the reactivity with carbon dioxide and foamability. The cyclic amine compound (a1) having a saturated six-membered ring may be any one of a cis-body, a trans-body and a mixture of a cis-body and a trans-body.

It is preferable that the cyclic amine compound (a1) has a cyclic structure from the viewpoint of the improvement of the reactivity with carbon dioxide and foamability. More specifically, it is preferable that the cyclic amine compound (a1) is a monocyclic compound.

Examples of alicyclic hydrocarbon structures in the cyclic amine compound (a1) include a cyclopropane ring, a cyclobutane ring, a cyclopentane ring, a cyclohexane ring, a cycloheptane ring and a cyclooctane ring. Of the above ring structures, a cyclopentane ring and a cyclohexane ring are preferred, and a cyclohexane ring is more preferred, and a 1,3-substituted cyclohexane ring is more preferred.

The number of amino groups in the cyclic amine compound (a1) is preferably 2 or more and preferably 6 or less, more preferably 4 or less, even more preferably 3 or less, and still more preferably 2 from the viewpoint of the improvement of the reactivity with carbon dioxide, curability and foamability.

An amino group having a nitrogen-hydrogen bond is preferred as the amino group, and at least one amino group selected from the group consisting of a primary amino group and a secondary amino group is more preferred, and a primary amino group is further preferred from the viewpoint of the improvement of the reactivity with carbon dioxide, curability and foamability.

The cyclic amine compound (a1) preferably comprises a compound represented by the following formula (1), and is more preferably a compound represented by the following formula (1).

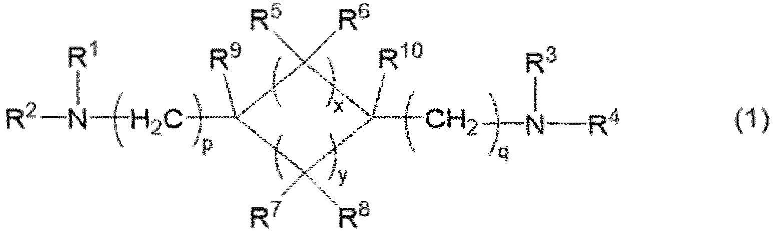

In the above formula (1), R¹ to R⁴ each independently represent a hydrogen atom, or a hydrocarbon group having 1 or more and 10 or less carbon atoms and optionally having at least one substituent selected from the group consisting of an amino group, a cyano group and a phenyl group; R⁵ to R¹⁰ each independently represent a hydrogen atom or a hydrocarbon group having 1 or more and 4 or less carbon atoms; x and y each independently represent an integer of 0 or more and 6 or less, and x + y is 1 or more and 6 or less; and p and q are each independently an integer of 0 or more and 4 or less, and at least one of p and q is 1 or more.

R¹ to R⁴ are each independently a hydrogen atom, or a hydrocarbon group having 1 or more and 10 or less carbon atoms and optionally having at least one substituent selected from the group consisting of an amino group, a cyano group and a phenyl group; preferably a hydrogen atom, or an alkyl group having 1 or more and 4 or less carbon atoms and optionally having at least one substituent selected from the group consisting of an amino group, a cyano group and a phenyl group; more preferably a hydrogen atom, or an alkyl group having 1 or more and 4 or less carbon atoms and optionally having at least one substituent selected from the group consisting of an amino group and a cyano group; even more preferably a hydrogen atom, or an alkyl group having 2 or more and 4 or less carbon atoms and optionally having at least one substituent selected from the group consisting of an amino group and a cyano group, and still more preferably a hydrogen atom.

The number of carbon atoms in the hydrocarbon group of R¹ to R⁴ is each independently 1 or more, preferably 2 or more and 10 or less, preferably 5 or less, more preferably 4 or less, and even more preferably 3 or less.

R⁵ to R¹⁰ are each independently a hydrogen atom or a hydrocarbon group having 1 or more and 4 or less carbon atoms, preferably a hydrogen atom or an alkyl group having 1 or more and 4 or less carbon atoms, more preferably a hydrogen atom or an alkyl group having 1 or more and 3 or less carbon atoms, and even more preferably a hydrogen atom or a methyl group, and still more preferably a hydrogen atom.

The number of carbon atoms in the hydrocarbon group of R⁵ to R¹⁰ is each independently 1 or more and 4 or less, preferably 1 or 2, and more preferably 1.

p and q are each independently 0 or more, and preferably 1 or more, and 4 or less, preferably 2 or less and more preferably 1. At least one of p and q is 1 or more.

x and y each independently represents an integer of 0 or more and 6 or less, respectively, and x + y is 1 or more and 6 or less. x + y is preferably 2 or more, more preferably 3 or more, and even more preferably 4 or more to increase the amount of carbon dioxide absorbed and to improve foamability. x + y is preferably 5 or less and more preferably 4 to increase the amount of carbon dioxide absorbed and to improve foamability. In other words, the alicyclic hydrocarbon structure is preferably a five-membered ring or a six-membered ring, and more preferably a six-membered ring. When x + y is 4, it is preferable that x is 1 and y is 3.

It is preferable that the cyclic amine compound (a1) includes at least one selected from the group consisting of o-xylylenediamine and a derivative thereof, m-xylylenediamine and a derivative thereof, p-xylylenediamine and a derivative thereof, bis(aminomethyl)cyclohexane and a derivative thereof, N-(2-aminoethyl)piperazine and a derivative thereof, limonenediamine and a derivative thereof, isophoronediamine and a derivative thereof, 2,5-bisaminomethylfuran and a derivative thereof and 2,5-bis(aminomethyl)tetrahydrofuran and a derivative thereof from the viewpoint of the improvement of the reactivity with carbon dioxide, curability and foamability. At least one selected from the group consisting of m-xylylenediamine and a derivative thereof, bis(aminomethyl)cyclohexane and a derivative thereof, N-(2-aminoethyl)piperazine and a derivative thereof, limonenediamine and a derivative thereof and isophoronediamine and a derivative thereof are more preferred. At least one selected from the group consisting of bis(aminomethyl)cyclohexane and a derivative thereof, limonenediamine and a derivative thereof and isophoronediamine and a derivative thereof are further preferred. Bis(aminomethyl)cyclohexane and a derivative thereof are still more preferred; 1,3-bis(aminomethyl)cyclohexane and a derivative thereof are still further preferred; and 1,3-bis(aminomethyl)cyclohexane is yet more preferred.

In this regard, examples of derivatives of the above amines include a compound in which at least one of the hydrogen atoms in the amino group is substituted by a hydrocarbon group having 1 or more and 10 or less carbon atoms and optionally having at least one substituent selected from the group consisting of an amino group, a cyano group and a phenyl group, preferably alkyl group having 1 or more and 4 or less carbon atoms and optionally having at least one substituent selected from the group consisting of an amino group, cyano group and a phenyl group, more preferably an alkyl group having 1 or more and 4 or less carbon atoms and optionally having at least one substituent selected from the group consisting of an amino group and a cyano group, even more preferably an alkyl group having 2 or more and 4 or less carbon atoms and optionally having at least one substituent selected from the group consisting of an amino group and a cyano group.

Examples of derivatives of the above amines also include a compound in which at least some of the hydrogen atoms in the cyclic structure are substituted by a hydrocarbon group having 1 or more and 4 or less carbon atoms, preferably an alkyl group having 1 or more and 3 or less carbon atoms, more preferably a methyl group or an ethyl group, and even more preferably a methyl group.

These cyclic amine compounds (a1) may be used alone or in combination of 2 or more.

The ratio of the cyclic amine compound (a1) in the amine compound in the reaction product (a2) is preferably 50 parts by mass or more, more preferably 60 parts by mass or more, even more preferably 70 parts by mass or more, still more preferably 80 parts by mass or more, yet more preferably 90 parts by mass or more and yet more preferably 95 parts by mass or more, and preferably 100 parts by mass or less based on 100 parts by mass in total of the amine compounds to increase the amount of carbon dioxide absorbed and improve foamability.

Examples of amine compounds other than the cyclic amine compound (a1) include a cyclic amine compound other than the cyclic amine compound (a1), an acyclic aliphatic amine compound such as monoethanolamine, 2-amino-2-methyl-1-propanol, diethanolamine, 2-(methylamino)ethanol, 2-(ethylamino)ethanol, 2-(dimethylamino)ethanol, 2-(diethylamino)ethanol, ethylenediamine, N,N'-dimethylethylenediamine and diethylenetriamine.

The amine curing agent (A) may include a component other than the reaction product (a2), which is, for example, an amine compound unreacted with carbon dioxide. As the amine compound unreacted with carbon dioxide, the cyclic amine compound (a1) described above is preferred. Preferred compounds thereof are the same as those for the cyclic amine compound (a1); and at least one selected from the group consisting of o-xylylenediamine and a derivative thereof, m-xylylenediamine and a derivative thereof, p-xylylenediamine and a derivative thereof, bis(aminomethyl)cyclohexane and a derivative thereof, N-(2-aminoethyl)piperazine and a derivative thereof, limonenediamine and a derivative thereof, isophoronediamine and a derivative thereof, 2,5-bisaminomethylfuran and a derivative thereof and 2,5-bis(aminomethyl)tetrahydrofuran and a derivative thereof are preferred. At least one selected from the group consisting of m-xylylenediamine and a derivative thereof, bis(aminomethyl)cyclohexane and a derivative thereof, and isophoronediamine and a derivative thereof are more preferred. At least one selected from the group consisting of m-xylylenediamine, 1,3-bis(aminomethyl)cyclohexane and isophoronediamine are further preferred.

The amine compound unreacted with carbon dioxide may be the same as or different from the amine compound in the reaction product (a2).

The content of the reaction product (a2) in the amine curing agent (A) is preferably 50% by mass or more, more preferably 70% by mass or more, even more preferably 80% by mass or more, still more preferably 90% by mass or more, yet more preferably 95% by mass or more, and yet more preferably 98% by mass or more, and preferably 100% by mass or less based on 100% by mass of the amine curing agent (A) in total to increase the amount of carbon dioxide absorbed and improve foamability.

The content of the reaction product (a2) in the amine curing agent (A) is preferably 30% by mass or more, more preferably 40% by mass or more, even more preferably 50% by mass or more, and preferably 90% by mass or less, more preferably 80% by mass or less and even more preferably 70% by mass or less based on 100% by mass of the amine curing agent (A) in total to improve mechanical strength of the foam.

The cyclic amine compound (a1) has a maximum carbon dioxide release temperature measured by the following method of preferably 200°C or less, more preferably 180°C or less, even more preferably 160°C or less, still more preferably 150°C or less, yet more preferably 140°C or less, yet more preferably 135°C or less, and yet even more preferably 130°C or less to improve carbon dioxide release performance, foamability and repeated usability of the epoxy resin foam. The lower limit of the above maximum carbon dioxide release temperature is not particularly limited, and for example 40°C or more.

### (Method)

The cyclic amine compound (a1) with carbon dioxide absorbed is heated at a heating rate of 10°C/ minute from 23°C to 250°C, and the temperature at which the amount of heat absorbed due to desorption of carbon dioxide reaches the maximum is measured, and the temperature is defined as the maximum carbon dioxide release temperature. In this regard the cyclic amine compound (a1) with carbon dioxide absorbed may be prepared by leaving 5 mmol of the cyclic amine compound (a1) to stand in air at 23°C and 50%RH for 24 hours.

The cyclic amine compound (a1) has an acid dissociation constant (pKa) of preferably 8.0 or more, more preferably 8.5 or more, and even more preferably 9.0 or more to increase the amount of carbon dioxide absorbed and improve foamability. The cyclic amine compound (a1) has an acid dissociation constant (pKa) of preferably 12.0 or less, more preferably 11.5 or less, and even more preferably 11.0 or less to improve the carbon dioxide release performance and improve foamability and repeated usability of the epoxy resin foam.

The acid dissociation constant of the cyclic amine compound (a1) is measured by the following measurement method based on acid-base titration.
(1) 0.2 g of the cyclic amine compound (a1) is dissolved in 30 mL of purified water.
(2) The acid dissociation constant (pKa) is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The temperature in the measurement is 25 ± 2°C.

The cyclic amine compound (a1) has a molecular weight of preferably 110 or more, more preferably 120 or more, and even more preferably 130 or more in order to suppress weight reduction in the heat treatment for releasing carbon dioxide, and preferably 200 or less, more preferably 180 or less, and even more preferably 175 or less to increase the amount of carbon dioxide absorbed and improve foamability.

The maximum endothermic temperature of the cyclic amine compound (a1) calculated by the following method is preferably 130°C or more, more preferably 140°C or more, and even more preferably 150°C or more in order to suppress weight reduction in the heat treatment for releasing carbon dioxide, and preferably 260°C or less, more preferably 230°C or less, even more preferably 200°C or less, and still more preferably 170°C or less to increase the amount of carbon dioxide absorbed and improve foamability.

### (Method)

The cyclic amine compound (a1) is heated at a heating rate of 10°C/minute from 23°C to 350°C and the temperature at which the amount of heat absorbed due to evaporation of the cyclic amine compound (a1) reaches the maximum is measured, and the temperature is defined as the maximum endothermic temperature of the cyclic amine compound (a1).

The cyclic amine compound (a1) has an amine value of preferably 400 mg KOH/ g or more, more preferably 500 mg KOH/ g or more, even more preferably 600 mg KOH/g or more, and still more preferably 650 mg KOH/g or more, and preferably 1,500 mg KOH/g or less, more preferably 1,200 mg KOH/g or less, even more preferably 1,000 mg KOH/g or less, still more preferably 900 mg KOH/g or less, even more preferably 850 mg KOH/g or less, and yet more preferably 800 mg KOH/g or less to increase the amount of carbon dioxide absorbed and improve foamability. The amine value refers to the amount of amine in a compound, which is parts per million of potassium hydroxide (KOH) equivalent to the amount of acid necessary for neutralizing 1 g of the compound.

The amine value may be measured by the following method according to JIS K7237-1995.
(1) 0.1 g of the cyclic amine compound (a1) is dissolved in 20 mL of acetic acid.
(2) The amine value is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The percentage increase of the mass of the above amine compound calculated by the following equation after leaving the amine compound to stand in an air environment of 23°C and 50% RH for a week is preferably 15% by mass or more, more preferably 18% by mass or more, even more preferably 20% by mass or more, and still more preferably 23% by mass or more, and is preferably 50% by mass or less, more preferably 45% by mass or less, even more preferably 40% by mass or less, still more preferably 30% by mass or less and yet more preferably 28% by mass or less to increase the amount of carbon dioxide absorbed and improve foamability of the epoxy resin foam (D).

Percentage increase of mass of amine compound [% by mass] = 100 × amount of increase of mass of amine compound (g) / (mass of amine compound (g) + amount of increase of mass of amine compound (g)).

The percentage increase of the mass of the above amine compound may be specifically measured by the method described in Examples.

The amine curing agent (A) may be obtained by contacting an amine compound comprising a cyclic amine compound (a1) with a gas containing carbon dioxide to react the amine compound with carbon dioxide.

The reaction product (a2) of the amine compound and carbon dioxide includes, for example, at least one selected from the group consisting of carbamic acid, carbamate, carbonate and hydrogen carbonate, which are a reaction product of the amine compound and carbon dioxide.

### <Epoxy resin (B)>

The epoxy resin (B) may be any of a saturated or unsaturated aliphatic compound, an alicyclic compound, an aromatic compound and a heterocyclic compound. It is preferable that the epoxy resin (B) includes an epoxy resin having an aromatic ring or an alicyclic structure in a molecule thereof from the viewpoint of the improvement of heat resistance, chemical resistance, curability, mechanical strength and the like.

Specific examples of epoxy resins include at least one resin selected from the group consisting of an epoxy resin having a glycidylamino group derived from metaxylylenediamine, an epoxy resin having a glycidylamino group derived from paraxylylenediamine, an epoxy resin having a glycidylamino group derived from 1,3-bis(aminomethyl)cyclohexane, an epoxy resin having a glycidylamino group derived from 1,4-bis(aminomethyl)cyclohexane, an epoxy resin having a glycidylamino group derived from diaminodiphenylmethane, an epoxy resin having a glycidylamino group and/or glycidyloxy group derived from p-aminophenol, an epoxy resin having a glycidyloxy group derived from bisphenol A, an epoxy resin having a glycidyloxy group derived from bisphenol F, an epoxy resin having a glycidyloxy group derived from phenol novolac and an epoxy resin having a glycidyloxy group derived from resorcinol. The above epoxy resin may be used in a mixture of two or more.

Of them, those containing, as the main component, at least one selected from the group consisting of an epoxy resin having a glycidylamino group derived from metaxylylenediamine, an epoxy resin having a glycidylamino group derived from paraxylylenediamine, an epoxy resin having a glycidyloxy group derived from bisphenol A and an epoxy resin having a glycidyloxy group derived from bisphenol F are preferred as the epoxy resin (B) from the viewpoint of the improvement of heat resistance, chemical resistance, mechanical strength and the like. Those containing an epoxy resin having a glycidyloxy group derived from bisphenol A as the main component is more preferred from the viewpoint of the improvement of heat resistance, chemical resistance, mechanical strength, availability and from the economic point of view.

The "main component" as used herein means that other components may be included to the extent not departing from the spirit of the present invention. The amount of the main component based on the entirety is preferably 50 to 100% by mass, more preferably 70 to 100% by mass, and even more preferably 90 to 100% by mass.

For the content of the amine curing agent (A) in the epoxy resin composition (C), the ratio of the number of active amine hydrogen atoms in the amine curing agent (A) to the number of epoxy groups in the epoxy resin (B) (number of active amine hydrogen atoms/ number of epoxy groups) is preferably 0.5 or more, more preferably 0.8 or more, even more preferably 1.0 or more, still more preferably 1.1 or more and yet more preferably 1.2 or more to increase the amount of carbon dioxide absorbed by the epoxy resin foam (D). The ratio of the number of active amine hydrogen atoms in the amine curing agent (A) to the number of epoxy groups in the epoxy resin (B) is preferably 2.0 or less, more preferably 1.8 or less, even more preferably 1.5 or less, still more preferably 1.4 or less, and yet more preferably 1.3 or less from the viewpoint of the improvement of heat resistance, chemical resistance, curability and mechanical strength of the epoxy resin foam (D).

The number of active amine hydrogen atoms in the amine curing agent (A) means the sum of the number of active hydrogen atoms in the amine compound before reacting with carbon dioxide in the reaction product (a2) and the number of active amine hydrogen atoms in the amine compound unreacted with carbon dioxide in the amine curing agent (A).

The epoxy resin composition (C) may also include other components such as a modifying component including a filler and a plasticizer, a flow modifying component such as a thixotropic agent, a pigment, a leveling agent, a tackifier, elastomer fine particles, a curing accelerator, an antifoaming agent and a chemical blowing agent, depending on applications.

The total content of the amine curing agent (A) and the epoxy resin (B) in the epoxy resin composition (C) is preferably 50% by mass or more, more preferably 70% by mass or more, even more preferably 80% by mass or more, still more preferably 90% by mass or more, and yet more preferably 95% by mass or more to effectively attain effects of the present invention. The upper limit is 100% by mass.

The amount of carbon dioxide absorbed by the epoxy resin foam (D) per unit volume is preferably 0.003 g/cm³ or more, more preferably 0.005 g/cm³ or more, even more preferably 0.010 g/cm³ or more, still more preferably 0.020 g/cm³ or more, and yet more preferably 0.025 g/cm³ or more to improve carbon dioxide absorption capacity. The larger the amount of carbon dioxide absorbed, the better; and thus the upper limit is not particularly limited, and for example, is 0.10 g/cm³ or less. The amount of carbon dioxide absorbed may be measured by the method described in Examples.

The epoxy resin foam (D) has a density of preferably 0.01 g/cm³ or more, more preferably 0.05 g/cm³ or more, even more preferably 0.10 g/cm³ or more, and still more preferably 0.13 g/cm³ or more from the viewpoint of the improvement of mechanical strength. The epoxy resin foam (D) has a density of preferably 0.80 g/cm³ or less, more preferably 0.60 g/cm³ or less, even more preferably 0.50 g/cm³ or less, and still more preferably 0.45 g/cm³ or less from the viewpoint of the improvement of performance such as heat insulation, sound insulation and lightweight. The density of the epoxy resin foam (D) may be measured by the method described in Examples.

### <Method for preparing epoxy resin composition (C)>

The method for preparing the epoxy resin composition (C) is not particularly limited. The epoxy resin composition (C) may be produced by mixing the amine curing agent (A), the epoxy resin (B) and if necessary, other components by a known method using a known apparatus.

### [Method for producing epoxy resin foam]

The method for producing an epoxy resin foam of the present invention comprises a step of foaming an epoxy resin composition (C) comprising an amine curing agent (A) and an epoxy resin (B), and the amine curing agent (A) comprises a reaction product (a2) of an amine compound comprising a cyclic amine compound (a1) and carbon dioxide, and the cyclic amine compound (a1) has an amino group bonded to a primary carbon atom.

By the method for producing an epoxy resin foam of the present invention, a foam with improved carbon dioxide absorption capacity can be obtained.

The reason why the method for producing an epoxy resin foam of the present invention is effective is assumed to be the same as the reason why the epoxy resin foam of the present invention described above is effective.

The respective components used in the method for producing an epoxy resin foam of the present invention and preferred embodiments thereof are the same as those for the epoxy resin foam of the present invention described above.

In the step of foaming the epoxy resin composition (C), a cyclic amine compound (a1) and carbon dioxide are generated from the reaction product (a2) by heating the epoxy resin composition (C), and carbon dioxide causes the epoxy resin composition (C) to foam, and at the same time the epoxy resin composition (C) is cured by the reaction between the resulting amine compound comprising the cyclic amine compound (a1) and the epoxy resin (B). This provides the epoxy resin foam (D).

The temperature and the time of heating in the step of foaming the epoxy resin composition (C) may be optionally selected, and the temperature is preferably 50 to 250°C, more preferably 100 to 200°C, and even more preferably 120 to 180°C from the viewpoint of the reaction speed, productivity, and prevention of decomposition of raw materials. The reaction time is preferably 10 minutes to 12 hours, more preferably 15 minutes to 4 hours.

It is preferable that the method for producing an epoxy resin foam of the present invention further comprises a step of obtaining a reaction product (a2) by contacting the amine compound comprising the cyclic amine compound (a1) with a gas having a concentration of carbon dioxide of 0.01% by volume or more and 10% by volume or less to react the amine compound with carbon dioxide, before the step of foaming the epoxy resin composition (C).

The gas has a carbon dioxide concentration of preferably 0.02% by volume or more, and more preferably 0.03% by volume or more, and preferably 5% by volume or less, more preferably 1% by volume or less, even more preferably 0.5% by volume or less, and still more preferably 0.1% by volume or less. It is more preferable that the gas having a concentration of carbon dioxide of 0.01% by volume or more and 10% by volume or less is air.

The reaction product (a2) is a reaction product of the amine compound comprising a cyclic amine compound (a1) and carbon dioxide, and includes, for example, at least one selected from the group consisting of carbamic acid, carbamate, carbonate and hydrogen carbonate, which are a reaction product of the amine compound and carbon dioxide.

### [Carbon dioxide absorbent]

The carbon dioxide absorbent of the present invention comprises the epoxy resin foam (D) described above. Since the carbon dioxide absorbent of the present invention comprises the epoxy resin foam (D), it can improve the carbon dioxide absorption capacity.

The content of the epoxy resin foam (D) in the carbon dioxide absorbent of the present invention is 60% by mass or more, preferably 70% by mass or more, more preferably 80% by mass or more, even more preferably 90% by mass or more, still more preferably 95% by mass or more and yet more preferably 98% by mass or more, and preferably 100% by mass or less when the total amount of the carbon dioxide absorbent is 100% by mass to improve carbon dioxide absorption capacity.

The carbon dioxide absorbent of the present invention absorbs a large amount of carbon dioxide in the air, and thus the carbon dioxide absorbent can be suitably applied to the technique of direct capture of carbon dioxide in the air (DAC).

Furthermore, the carbon dioxide absorbent of the present invention can be suitably used for collecting carbon dioxide at a low concentration of, for example, 0.01% by volume or more and 1% by volume or less.

The carbon dioxide absorbent of the present invention may contain a component different from the epoxy resin foam (D) to the extent not impairing the effect of the present invention. Examples of components other than the epoxy resin foam (D) include a compound other than the epoxy resin foam (D) which can absorb carbon dioxide, a deterioration inhibitor, an antifoaming agent, an antioxidant, and a desiccant for removing moisture (e.g., magnesium sulfate, molecular sieves).

### [Multilayer structure]

The multilayer structure of the present invention has an outer layer on at least one surface of the epoxy resin foam.

The material constituting the outer layer of the multilayer structure is not particularly limited, and examples thereof include metal, resin and a fiber-reinforced composite material. Examples of metal include stainless steel, aluminum, iron, copper and alloy. Examples of resin include a thermoplastic resin, a cured product of a thermosetting resin and a cured product of an energy ray curable resin.

Examples of fiber-reinforced composite materials constituting the outer layer include a fiber-reinforced composite materials containing a matrix resin and a reinforcing fiber.

Examples of matrix resins include a thermoplastic resin, a cured product of a thermosetting resin and a cured product of energy ray curable resin. The matrix resin is preferably a cured product of a thermosetting resin, and more preferably a cured product of an epoxy resin composition from the viewpoint of the improvement of adhesion between the outer layer and the epoxy resin foam, which constitutes the core layer.

While the epoxy resin composition, which is the precursor of the matrix resin, may have the same or different composition from the epoxy resin composition (C), it is preferable that the epoxy resin composition is not foamable. In other words, it is preferable that the epoxy resin composition, which is the precursor of the matrix resin, includes at least an epoxy resin and an epoxy resin curing agent, and does not include a reaction product of an amine compound and carbon dioxide. The content of the reaction product of the amine compound and carbon dioxide in the epoxy resin composition is preferably 5% by mass or less, more preferably 1% by mass or less, even more preferably 0.5% by mass or less and still more preferably 0% by mass.

Examples of forms of the reinforcing fiber used for the fiber-reinforced composite material include short fiber, long fiber and continuous fiber. Of them, long fiber and continuous fiber are preferred, and continuous fiber is more preferred, from the viewpoint of easiness in molding, allowing the multilayer structure to be molded into a desired shape.

In the present description, the short fiber refers to those with a fiber length of 0.1 mm or more and less than 10 mm, and the long fiber refers to those with a fiber length of 10 mm or more and 100 mm or less. The continuous fiber refers to a fiber bundle with a fiber length of more than 100 mm.

Examples of forms of continuous fiber include unidirectional (UD) material in which monofilament or multifilament is aligned in a direction or to be crossed alternately, a fabric such as a knitted fabric, a nonwoven fabric and a mat. Of them, to produce a fiber-reinforced composite material for the outer layer, the fiber is preferably in the form of monofilament, fabric nonwoven fabric or a mat, and more preferably a fabric.

For the continuous fiber, the average fiber length of continuous fiber bundles is not particularly limited, but the fiber bundle has an average fiber length of preferably 1 to 10,000 m, more preferably 100 to 10,000 m from the viewpoint of formability.

The continuous fiber bungle has an average fineness of preferably 50 to 2,000 tex (g/ 1000 m), more preferably 200 to 1,500 tex, and even more preferably 500 to 1,500 tex from the viewpoint of formability and easiness in achieving high strength and high elastic modulus.

Furthermore, the continuous fiber bungle has an average tensile modulus of preferably 50 to 1,000 GPa.

Examples of materials of reinforcing fiber include inorganic fiber such as carbon fiber, glass fiber, basalt fiber, metal fiber, boron fiber and ceramic fiber; and organic fiber such as aramid fiber, polyoxymethylene fiber, aromatic polyamide fiber, polyparaphenylene benzobisoxazole fiber and ultra high molecular weight polyethylene fiber. Of them, to achieve high strength, inorganic fiber is preferred, and at least one selected from the group consisting of carbon fiber, glass fiber and basalt fiber is preferred because they are light weight, and have high strength and high elastic modulus. The material of reinforcing fiber is more preferably carbon fiber in consideration of strength and lightweight.

Examples of carbon fiber include polyacrylonitrile carbon fiber and pitch carbon fiber. Furthermore, carbon fiber derived from plant such as lignin and cellulose may be used.

The reinforcing fiber may be treated with a treatment agent. Examples of treatment agents include a surface treatment agent and a sizing agent.

A silane coupling agent is preferred as the above surface treatment agent. Examples thereof include a silane coupling agent containing a vinyl group, a silane coupling agent containing an amino group, a silane coupling agent containing an epoxy group, a silane coupling agent containing a (meta)acrylic group and a silane coupling agent containing a mercapto group.

Examples of the above sizing agents include a urethane sizing agent, an epoxy sizing agent, an acrylic sizing agent, a polyester sizing agent, a vinyl ester sizing agent, a polyolefin sizing agent, a polyether sizing agent, and a carboxylic acid sizing agent. One of them may be used or two or more of them may be used in combination. Examples of combinations of two or more sizing agents include a urethane/epoxy sizing agent, a urethane/acrylic sizing agent and a urethane/carboxylic acid sizing agent.

The amount of the treatment agent is preferably 0.001 to 5% by mass, more preferably 0.1 to 3% by mass and even more preferably 0.5 to 2% by mass based on the reinforcing fiber to improve interfacial adhesion between the reinforcing fiber and the matrix resin and improve strength and impact resistance.

A commercially available product may be used as the reinforcing fiber. Examples of commercially available continuous carbon fiber include Trayca Cloth "CO6142," "CO6151B," "CO6343," "CO6343B," "CO6347B," "CO6644B," "CK6244C," "CK6273C," "CK6261C," "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series; Trayca yarn "T300," "T300B," "T400HB," "T700SC," "T800SC," "T800HB," "T830HB," "T1000GB," "T100GC," "M35JB," "M40JB," "M46JB," "M50JB," "M55J," "M55JB," "M60JB," "M30SC," and "Z600" series made by Toray Industries, Inc; Tenax "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, and "HTS40MC" series made by Teijin Limited; Tenax "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, "HTS40MC" series made by Teijin Limited; PYROFIL "TR3110M," "TR3523M," "TR3524M," "TR6110HM," "TR6120HM," "TRK101M," "TRK510M," "TR3160TMS," "TRK979PQRW," "TRK976PQRW," "TR6185HM," "TRK180M," made by Mitsubishi Chemical Corporation; and carbon fiber fabric "50K NCF0°/90°" made by SGL, PYROFII, "HT," "IM," "HM" series, GRAFII, "HT" series, and "DIALEAD" series carbon fiber tow made by Mitsubishi Chemical Corporation.

When the outer layer is made of a fiber-reinforced composite material, the content of the reinforcing fiber in the outer layer is such that the volume fraction of the reinforcing fiber in the outer layer is preferably in the range of 0.10 or more, more preferably 0.20 or more, even more preferably 0.30 or more, and still more preferably 0.40 or more in view of achieving high strength and high elastic modulus, and is preferably in the range of 0.85 or less, more preferably 0.80 or less, even more preferably 0.70 or less from the viewpoint of impact resistance and formability.

The volume fraction Vf of the reinforcing fiber in the outer layer may be calculated by the following equation. Vf = {mass of reinforcing fiber (g) / specific gravity of reinforcing fiber} ÷ [{mass of reinforcing fiber (g) / specific gravity of reinforcing fiber} + {mass of matrix resin (g) / specific gravity of matrix resin}]

### <Structure of multilayer structure>

The multilayer structure of the present invention may have an outer layer at least on one surface of the epoxy resin foam, but it is preferable that the multilayer structure has an outer layer on both surfaces of the epoxy resin foam to improve mechanical strength. In other words, it is more preferable that the multilayer structure of the present invention has an outer layer (Ia), a core layer consisting of the epoxy resin foam, and an outer layer (Ib), in the order mentioned as shown in Fig. 1.

Fig. 1 is a schematic cross-sectional view illustrating an embodiment of the multilayer structure 100 of the present invention; 1a indicates an outer layer (Ia), 1b an outer layer (Ib) and 2 a core layer. The outer layer (Ia) and the outer layer (Ib) may be made of the same or a different material.

It is preferable that the multilayer structure of the present invention has an outer layer (Ia), a core layer consisting of the epoxy resin foam, and an outer layer (Ib), in the order mentioned, and at least one of the outer layer (Ia) and the outer layer (Ib) is made of a fiber-reinforced composite material including a matrix resin and a reinforcing fiber from the viewpoint of the improvement of mechanical strength and lightweight. It is preferable that both the outer layer (Ia) and the outer layer (Ib) are made of the fiber-reinforced composite material.

### <Method for producing multilayer structure>

The method for producing the multilayer structure of the present invention is not particularly limited, and a known method may be used.

For example, it is preferable that the method for producing a multilayer structure 100 comprising an outer layer (Ia), a core layer consisting of the epoxy resin foam, and an outer layer (Ib), in the order mentioned comprises at least one step selected from the following step (i) to step (iii) to improve production efficiency.

Step (i): preparing a laminate (i) by laminating the outer layer (Ia) or a precursor thereof, a foamable layer (II) comprising the epoxy resin composition (C) comprising the amine curing agent (A) and the epoxy resin (B), and the outer layer (Ib) or a precursor thereof in the order mentioned, and then foaming the foamable layer (II);

Step (ii): preparing a laminate (ii) by laminating the outer layer (Ia) or a precursor thereof, the core layer, and the outer layer (Ib) or a precursor thereof in the order mentioned, and then integrating the outer layer (Ia) or a precursor thereof, the core layer, and the outer layer (Ib) or a precursor thereof; and

Step (iii): preparing a laminate (iii) by laminating and integrating the outer layer (Ia) or a precursor thereof and the core layer, and then laminating and integrating the laminate (iii) and the outer layer (Ib) or a precursor thereof.

### (Step (i))

In step (i), a laminate (i) is prepared by laminating the outer layer (Ia) or a precursor thereof, a foamable layer (II) comprising the epoxy resin composition (C) comprising the amine curing agent (A) and the epoxy resin (B), and the outer layer (Ib) or a precursor thereof in the order mentioned, and then the foamable layer (II) is foamed.

In step (i), simultaneously with foaming of the foamable layer (II), the outer layer (Ia), the core layer prepared by foaming of the foamable layer (II) and the outer layer (Ib) are integrated. Furthermore, the precursor of the outer layer (Ia) and the precursor of the outer layer (Ib) are converted into the outer layer (Ia) and the outer layer (Ib), respectively upon foaming of the foamable layer (II).

When the outer layer is made of a fiber-reinforced composite material including matrix resin and reinforcing fiber, examples of the "precursor of the outer layer" include a reinforcing fiber prepreg prepared by impregnating reinforcing fiber with a matrix resin precursor. A commercially available prepreg may be used as the reinforcing fiber prepreg, and those prepared by known RTM (Resin Transfer Molding) or hand layup molding may be used.

The reinforcing fiber prepreg preferably includes at least one matrix resin precursor selected from the group consisting of a thermosetting resin and an energy ray curable resin, and a reinforcing fiber, more preferably a thermosetting resin and a reinforcing fiber, and even more preferably an epoxy resin composition and a reinforcing fiber. The matrix resin precursor and preferred embodiments thereof are as described above.

The laminate (i) may be prepared, for example, by forming a foamable layer (II) by applying an epoxy resin composition (C) on one surface of the outer layer (Ia) or a precursor thereof, and laminating an outer layer (Ib) or a precursor thereof on the foamable layer (II). Alternatively, the laminate (i) may be prepared by previously forming a foamable layer (II) by previously reacting the epoxy resin composition (C) and molding it into a sheet, and laminating the outer layer (Ia) or a precursor thereof, the foamable layer (II) molded into a sheet and the outer layer (Ib) or a precursor thereof in the order mentioned.

It is preferable that the laminate (i) is prepared using the outer layer (Ia) and the outer layer (Ib) previously prepared from the viewpoint of the improvement of production efficiency of the multilayer structure of the present invention. This is because, although a precursor of the outer layer (Ia) and the outer layer (Ib) may be used in the preparation of the laminate (i), long time and high temperature heating is necessary in the step (i) to convert the precursor of the outer layer into the outer layer and to foam the foamable layer (II) simultaneously.

In step (i), the temperature of heating and the time of heating in foaming of the foamable layer (II) may be accordingly selected. For example, the same temperature of heating and time of heating as in the step of foaming the epoxy resin composition (C) may be used.

When foaming the foamable layer (II), pressurization may be performed simultaneously with heating using a heat press and the like in order to improve interlayer adhesiveness between the outer layer and the core layer prepared by foaming of the foamable layer (II). The condition of pressurization is not particularly limited, and usually the pressure is in the range of 0.1 to 5 MPa.

### (Step (ii))

In step (ii), a laminate (ii) is prepared by laminating the outer layer (Ia) or a precursor thereof, the core layer, and the outer layer (Ib) or a precursor thereof in the order mentioned, and then the outer layer (Ia) or a precursor thereof, the core layer, and the outer layer (Ib) or a precursor thereof are integrated.

The laminate (ii) may be prepared using a core layer previously prepared, by laminating the outer layer (Ia) or a precursor thereof, the core layer and the outer layer (Ib) or a precursor thereof in the order mentioned.

The outer layer or a precursor thereof used in step (ii) are the same as those described in step (i).

It is preferable that the laminate (ii) is prepared using the outer layer (Ia) and the outer layer (Ib) previously prepared, by laminating the outer layer (Ia), the core layer, and the outer layer (Ib), in the order mentioned to improve production efficiency of the multilayer structure.

Examples of methods for integrating the outer layer (Ia) or a precursor thereof, the core layer and the outer layer (Ib) or a precursor thereof of the laminate (ii) include a method in which the laminate (ii) is subjected to heating conditions. By subjecting the laminate (ii) to heating conditions, the precursor of the outer layer (Ia) and the precursor of the outer layer (Ib) are converted into the outer layer (Ia) and the outer layer (Ib), respectively, and integrated with the core layer. Alternatively, the laminate (ii) may be heated and pressurized at the same time using a heat press and the like. Preferred heating and pressurization conditions at that stage are the same as those in step (i).

### (Step (iii))

In step (iii), a laminate (iii) is prepared by laminating and integrating the outer layer (Ia) or a precursor thereof and the core layer, and then the laminate (iii) and the outer layer (Ib) or a precursor thereof are laminated and integrated.

The laminate (iii) may be prepared, for example, by laminating the outer layer (Ia) or a precursor thereof on one surface of the core layer and subjecting the resultant to heating conditions. By subjecting to heating conditions, the precursor of the outer layer (Ia) is converted to the outer layer (Ia), and integrated with the core layer. Alternatively, the laminate (iii) may be heated and pressurized at the same time using a heat press and the like. Preferred heating and pressurization conditions at that stage are the same as those in step (i).

Next, the outer layer (Ib) or a precursor thereof is laminated on the surface of the laminate (iii) on the side of the core layer, and the resultant is integrated by the same method as integrating the outer layer (Ia) to prepare a desired multilayer structure.

It is preferable that the method for producing a multilayer structure comprises step (i) of the step (i) to step (iii) to improve production efficiency and improve interlayer adhesiveness of the resulting multilayer structure.

The multilayer structure of the present invention has high mechanical strength and is lightweight, and thus may be used as a secondary structural material for aircrafts, automobile parts, building materials, panel members, electronic and electric parts and housings besides a carbon dioxide absorbent.

### Examples

Hereinafter the present invention will be described with reference to Examples, but the present invention is not limited to Examples. In the present Examples, the respective properties were measured by the following methods.

### (Acid dissociation constant (pKa) of amine compound)

The acid dissociation constant of the amine compound was measured by the following measurement method.
(1) 0.2 g of the amine compound was dissolved in 30 mL of purified water.
(2) The acid dissociation constant (pKa) was calculated by titrating the solution prepared in (1) above with 0.1 N perchloric acid - acetic acid solution using an automatic potentiometric titrator (AT-610 made by Kyoto Electronics Manufacturing Co., Ltd.).

The temperature in the measurement was 25 ± 2°C.

### (Amine value of amine compound)

The amine value was measured by the following measurement method according to JIS K7237-1995.
(1) 0.1 g of the amine compound was dissolved in 20 mL of acetic acid.
(2) The amine value was calculated by titrating the solution prepared in (1) above with 0.1 N perchloric acid - acetic acid solution using an automatic potentiometric titrator (AT-610 made by Kyoto Electronics Manufacturing Co., Ltd.)

### (Maximum endothermic temperature of amine compound)

The maximum endothermic temperature of the amine compound was measured by subjecting the amine compound to DSC as described below. First, differential scanning calorimetry of the amine compound was performed under conditions of a temperature range of 23 to 350°C, a heating rate of 10°C/ minute and a nitrogen atmosphere using a differential thermogravimeter (product name DTG-60 made by Shimadzu Corporation). The temperature at which the amount of heat absorbed due to the evaporation of the amine compound was the maximum was calculated from the DSC curve obtained, and the temperature was determined as the maximum endothermic temperature of the amine compound.

### (Maximum carbon dioxide (CO₂) release temperature of amine compound)

A carbon dioxide detector and a Petri dish were placed in an openable desiccator (inner dimension: 370 mm × 260 mm × 272 mm). Subsequently the amine compound (5 mmol) was added to the Petri dish in the desiccator and the door was immediately closed to leave the amine compound to stand in the desiccator in an air environment at 23°C and 50%RH for 24 hours. The initial concentration of carbon dioxide was adjusted to about 400 ppm.

Then the amine compound was removed from the desiccator to give an amine compound with carbon dioxide absorbed. The maximum carbon dioxide release temperature of the amine compound with carbon dioxide absorbed was measured by subjecting the amine compound to DSC as described below. First, differential scanning calorimetry of the amine compound was performed under conditions of a temperature range of 23 to 250°C, a heating rate of 10°C/ minute and a nitrogen atmosphere using a differential thermogravimeter (product name DTG-60 made by Shimadzu Corporation). The temperature at which the amount of heat absorbed due to the desorption of carbon dioxide was the maximum was calculated from the DSC curve obtained, and the temperature was determined as the maximum carbon dioxide release temperature of the amine compound.

The following amine compounds and the epoxy resins were used in Examples and Comparative Examples shown in Table 1.

### (Amine compound)

MXDA: metaxylylenediamine (made by Mitsubishi Gas Chemical Company, Inc.)
1,3-BAC: 1,3-bis(aminomethyl)cyclohexane (made by Mitsubishi Gas Chemical Company, Inc.)
AEP: N-(2-aminoethyl)piperazine (made by Tokyo Chemical Industry Co., Ltd.)
PACM: 4,4'-methylenebis(cyclohexylamine) (made by Tokyo Chemical Industry Co., Ltd.)
IPDA: isophoronediamine (made by Tokyo Chemical Industry Co., Ltd.).

### (Epoxy resin)

bis-A epoxy resin: bisphenol A liquid epoxy resin (made by Mitsubishi Chemical Corporation, Inc. "jER828," bisphenol A diglycidyl ether, epoxy equivalent 186 g/ eq)

### Example 1 (Production and evaluation of epoxy resin foam)

### (1) Absorption of carbon dioxide into amine compound (Preparation of reaction product (a2) of amine compound and carbon dioxide)

An amine compound, MXDA (5 mmol), was put in a container in a desiccator and the door of the desiccator was immediately closed. Subsequently, MXDA was left to stand in the desiccator in an air environment at 23°C and 50% RH for a week. By doing so MXDA and carbon dioxide in the air were reacted to give a carbonate of MXDA. At that stage, to suppress uneven reaction, the container in which the amine compound was placed was shaken as necessary so as not to leave unreacted MXDA. The initial concentration of carbon dioxide in the desiccator was adjusted to 400 ppm.

Next, increase of the mass of MXDA was measured and the percentage increase of the mass of the amine compound was calculated by the following equation. Percentage increase of mass of amine compound [% by mass] = 100 × amount of increase of mass of amine compound (g) / (initial mass of amine compound (g) + amount of increase of mass of amine compound (g))

### (2) Preparation of epoxy resin composition

The initial number of active amine hydrogen atoms in MXDA in (1) above was calculated and bis-A epoxy resin was precisely weighed so that the number of active amine hydrogen atoms/ the number of epoxy groups in the epoxy resin was as described in Table 1.

Next, the carbonate of MXDA prepared in (1) and bis-A epoxy resin were mixed with stirring using a disper at 3,000 rpm for 5 minutes to give an epoxy resin composition.

### (3) Production of epoxy resin foam

The epoxy resin composition prepared in (2) was put in a mold with a length × width × depth of 7 × 12 × 2.1 cm, and heated under conditions of a heating temperature of 150°C and a heating time of 30 minutes using a hot air dryer to cure and foam the epoxy resin composition. An epoxy resin foam was thus prepared.

The resulting epoxy resin foam was evaluated as follows. he results obtained are shown in Table 1.

### (Evaluation of foamability)

The formability of the epoxy resin composition was evaluated based on the density of the epoxy resin foam. A smaller density suggests excellent foamability.

The density of the epoxy resin foam was calculated from the mass and the volume of the foam.

### (Evaluation of carbon dioxide absorption capacity)

The epoxy resin foam obtained and a carbon dioxide detector were placed in an openable desiccator (inner dimension: 370 mm × 260 mm × 272 mm). The amount of carbon dioxide absorbed (g/cm³) per unit volume of the epoxy resin foam was calculated from the difference between carbon dioxide concentration C1 1,000 minutes after the epoxy resin foam was placed in the desiccator and the maximum carbon dioxide concentration C2 in the period of 1,000 minutes after the epoxy resin foam was placed in the desiccator (C2-C1).

The inside of the desiccator was under an air environment of 23°C and 50% RH, and the initial carbon dioxide concentration was adjusted to 400 ppm.

### (Examples 2 to 4 and Comparative Example 1)

The respective epoxy resin foams were prepared in the same manner as in Example 1 except for changing the type of the amine compound to compounds shown in Table 1.

The resulting epoxy resin foam was evaluated for the above items. The results obtained are shown in Table 1.

**Table 1**

| | Amine compound | | | | | | | | Epoxy resin | Number of active amine hydrogen atoms/ number of epoxy groups [-] | Evaluation of epoxy resin foam | |
|---|---|---|---|---|---|---|---|---|---|---|---|---|
| | Name | Structural formula | Molecular weight [-] | Maximum carbon dioxide release temperature [°C] | Maximum endothermic temperature [°C] | Amine value [mg KOH/ g] | pKa | Percentage increase of mass [% by mass] | | | Density [g/cm³] | Amount of CO₂ absorbed [g/cm³] |
| Example 1 | MXDA | 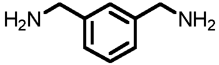 | 136.2 | 135.5 | 183.5 | 824 | 9.5 | 24.1 | bis-A epoxy resin | 1.0 | 0.19 | 0.0305 |
| | | | | | | | | | | 1.3 | 0.14 | 0.0262 |
| Example 2 | 1,3-BAC | 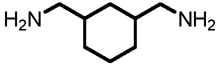 | 142.2 | 125.7 | 160.9 | 789 | 10.8 | 25.9 | bis-A epoxy resin | 1.0 | 0.17 | 0.0076 |
| | | | | | | | | | | 1.3 | 0.39 | 0.0288 |
| Example 3 | AEP | 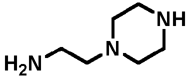 | 129.2 | 81.9 | 140.2 | 1303 | 8.9 | 43.7 | bis-A epoxy resin | 1.0 | 0.13 | 0.0220 |
| | | | | | | | | | | 1.3 | 0.53 | - |
| Example 4 | IPDA | 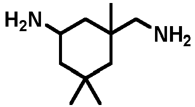 | 170.3 | 114.4 | 168.8 | 659 | 10.4 | 23.5 | bis-A epoxy resin | 1.0 | 0.25 | 0.0288 |
| | | | | | | | | | | 1.3 | 0.26 | 0.0408 |
| Comparative Example 1 | PACM | 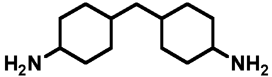 | 210.4 | 53 | 218.5 | 533 | 10.3 | 12.2 | bis-A epoxy resin | 1.0 | 0.21 | 0.0007 |
| | | | | | | | | | | 1.3 | 0.26 | 0.0011 |

Table 1 shows that the amount of carbon dioxide absorbed into the epoxy resin foams of Examples is larger than that into the foam of Comparative Example. This shows that the epoxy resin foam of the present invention can improve the carbon dioxide absorption capacity.

### Example 5 (Preparation and evaluation of multilayer structure)

A multilayer structure shown in Fig. 1 in which the outer layer (Ia), the core layer consisting of the epoxy resin foam and the outer layer (Ib) were laminated in the order mentioned was prepared, and evaluated by the following methods.

### (1) Preparation of carbon fiber reinforced composite material for outer layers (Ia), (Ib)

An epoxy resin composition was prepared by mixing 100 g of an epoxy resin, i.e., bisphenol A liquid epoxy resin ("DER332" made by OLIN) and 19 g of an epoxy resin curing agent, 1,3-bis(aminomethyl)cyclohexane (1,3-BAC made by Mitsubishi Gas Chemical Company, Inc., cis/trans ratio = 77/23). A carbon fiber fabric ("50K NCF 0°/90°" made by SGL, 300 g/m², 0.33 mm thick, 6 ply) was impregnated with the epoxy resin composition by hand layup at room temperature to give a carbon fiber composite base material. Next, the carbon fiber composite base material was put in upper and lower aluminum molds heated in advance at 130°C in an oven and the molds were immediately closed and heated for 3 minutes to cure the epoxy resin composition to give a carbon fiber reinforced composite material for the outer layer, which was made of the carbon fiber fabric and a cured product of matrix resin, i.e., the epoxy resin composition. Two pieces of the carbon fiber reinforced composite material for the outer layer were prepared by the same method.

The carbon fiber reinforced composite material has a thickness of 2 mm. The carbon fiber in the carbon fiber reinforced composite material has a volume fraction Vf of 0.49.

### (2) Preparation of epoxy resin composition (C)

5.94 g (32.96 mmol) of carbonate of metaxylylenediamine, which was the reaction product (a2) prepared in Example 1, and 2.99 g (21.95 mmol) of metaxylylenediamine (MXDA made by Mitsubishi Gas Chemical Company, Inc.) were used as an amine curing agent (A). 40.90 g of bisphenol A liquid epoxy resin ("jER828" made by made by Mitsubishi Chemical Corporation, bisphenol A diglycidyl ether, epoxy equivalent 186 g/ eq) was used as the epoxy resin (B). They were mixed with stirring using a disper under conditions of 3,000 rpm and 5 minutes to give an epoxy resin composition (C). The number of active amine hydrogen atoms in the amine curing agent (A)/ the number of epoxy groups in the epoxy resin (B) is 1/1.

### (3) Preparation of multilayer structure

A 10-mm thick spacer was put on the carbon fiber reinforced composite material for the outer layer (Ia) prepared in (1). The epoxy resin composition (C) prepared in (2) was applied to the inside of the spacer to form a foamable layer (II). Furthermore, the carbon fiber reinforced composite material for the outer layer (Ib) was superimposed on the spacer (preparation of laminate (i)), and the foamable layer (II) was foamed by heating at 80°C for 30 minutes to prepare a multilayer structure in which the outer layer (Ia), the core layer consisting of the epoxy resin foam and the outer layer (Ib) were laminated in the order mentioned.

### (4) Evaluation of multilayer structure

The mechanical strength and the specific gravity of the multilayer structure prepared in (3) above were measured by the following methods. The results are shown in Table 2.

### (Mechanical Strength)

A bending test was performed using Autograph ("AG-X plus 100kN" made by Shimadzu Corporation) at a temperature of 23°C, with a distance between points of 80 mm at a test rate of 5 mm/minutes to measure bending strength (MPa), specific strength (N · m/kg), bending elastic modulus (GPa), maximum test force (N) and displacement (mm).

### (Specific gravity)

The specific gravity was measured by using an electronic specific gravity meter ("MDS-300" made by Alfa Mirage).

**Table 2**

| Bending strength (MPa) | Specific gravity (g/cm³) | Specific strength (N · m/ kg) | Bending elastic modulus (GPa) | Maximum test force (N) | Displacement (mm) |
|---|---|---|---|---|---|
| 33.8 | 0.63 | 54 | 1.23 | 815 | 8.7 |

### Example 6 (Preparation of multilayer structure and evaluation of interlayer adhesiveness)

A multilayer structure shown in Fig. 1 in which the outer layer (Ia), the core layer consisting of the epoxy resin foam and the outer layer (Ib) were laminated in the order mentioned was prepared, and the interlayer adhesiveness was evaluated by the following methods.

### (1) Preparation of carbon fiber reinforced composite material for outer layers (Ia), (Ib)

A carbon fiber reinforced composite material for the outer layers (Ia), (Ib) was prepared in the same manner as in Example 5.

### (2) Preparation of epoxy resin composition (C)

1.35 g (7.49 mmol) of carbonate of metaxylylenediamine, which was the reaction product (a2) prepared in Example 1, and 0.68 g (4.99 mmol) of metaxylylenediamine (MXDA made by Mitsubishi Gas Chemical Company, Inc.) were used as an amine curing agent (A). 9.30 g of bisphenol A liquid epoxy resin ("jER828" made by made by Mitsubishi Chemical Corporation, bisphenol A diglycidyl ether, epoxy equivalent 186 g/ eq) was used as the epoxy resin (B). They were mixed with stirring using a disper under conditions of 3,000 rpm and 5 minutes to give an epoxy resin composition (C). The number of active amine hydrogen atoms in the amine curing agent (A)/ the number of epoxy groups in the epoxy resin (B) is 1/1.

### (3) Preparation of multilayer structure (test piece described in JIS K6851:1994)

The epoxy resin composition (C) prepared in (2) above was applied to the carbon fiber reinforced composite material for the outer layer (Ia) prepared in (1) above in a thickness of 1 mm, and the resultant was heated at 60°C for 45 minutes to foam a foamable layer (II). Furthermore, the carbon fiber reinforced composite material for the outer layer (Ib) was superimposed on the foamable layer (II) (preparation of laminate (i)), and the foamable layer (II) was foamed by heating at 130°C for 15 minutes to prepare a multilayer structure in which the outer layer (Ia), the core layer consisting of the epoxy resin foam and the outer layer (Ib) were laminated in the order mentioned. The multilayer structure was in the form of the test piece described in JIS K6851:1994. Three test pieces were prepared by the same method.

### (4) Evaluation of interlayer adhesiveness

The multilayer structure (test piece) prepared in (3) above was subjected to a tensile test using Autograph ("AG-X plus 100kN" made by Shimadzu Corporation) by the method according to JIS K6851:1994 at 23°C and a test rate of 1 mm/minute to measure the maximum shear stress (MPa). The average of the results of three tests are shown in Table 3. A larger value means higher interlayer adhesiveness.

### Example 7

A multilayer structure was prepared and its interlayer adhesiveness was evaluated in the same manner as in Example 6 except for using 1.35 g (7.49 mmol) of carbonate of metaxylylenediamine, which was the reaction product (a2) prepared in Example 1 and 0.71 g (4.99 mmol) of 1,3-bis(aminomethyl)cyclohexane (1,3-BAC made by Mitsubishi Gas Chemical Company, Inc.) as the amine curing agent (A). The results are shown in Table 3.

### Example 8

A multilayer structure was prepared and its interlayer adhesiveness was evaluated in the same manner as in Example 6 except for using 1.13 g (6.27 mmol) of carbonate of metaxylylenediamine, which was the reaction product (a2) prepared in Example 1 and 1.06 g (6.22 mmol) of isophoronediamine (IPDA made by EVONIK) as the amine curing agent (A). The results are shown in Table 3.

### Examples 9 to 11

An iron material ("SS400 sand-blasted on one side" made by Paltec Co., Ltd., 25 mm × 100 mm × thickness 1.6 mm) was prepared as the outer layers (Ia), (Ib).

A multilayer structure was prepared and its interlayer adhesiveness was evaluated in the same manner as in Example 6 except for using the above iron material as the outer layers (Ia) and (Ib), and metaxylylenediamine and carbonate of metaxylylenediamine, which was the reaction product (a2) prepared in Example 1, as the amine curing agent (A) at the ratio shown in Table 3. The results are shown in Table 3.

### Example 12

An iron material ("SS400 sand-blasted on one side" made by Paltec Co., Ltd., 25 mm × 100 mm × thickness 1.6 mm) was prepared as the outer layers (Ia), (Ib).

A multilayer structure was prepared and its interlayer adhesiveness was evaluated in the same manner as in Example 7 except for using the above iron material as the outer layers (Ia) and (Ib) and 1,3-bis(aminomethyl)cyclohexane and carbonate of metaxylylenediamine, which was the reaction product (a2) prepared in Example 1, as the amine curing agent (A) at the ratio shown in Table 3. The results are shown in Table 3.

### Example 13

An iron material ("SS400 sand-blasted on one side" made by Paltec Co., Ltd., 25 mm × 100 mm × thickness 1.6 mm) was prepared as the outer layers (Ia), (Ib).

A multilayer structure was prepared and its interlayer adhesiveness was evaluated in the same manner as in Example 8 except for using the above iron material as the outer layers (Ia) and (Ib), and isophoronediamine and carbonate of metaxylylenediamine, which was the reaction product (a2) prepared in Example 1, as the amine curing agent (A) at the ratio shown in Table 3. The results are shown in Table 3.

### Example 14

A multilayer structure was prepared and its interlayer adhesiveness was evaluated in the same manner as in Example 13 except for using carbonate of isophoronediamine, which was the reaction product (a2) prepared in Example 4, instead of the reaction product (a2) prepared in Example 1, and isophoronediamine and carbonate of isophoronediamine as the amine curing agent (A) at the ratio shown in Table 3. The results are shown in Table 3. The molar mass of the carbonate of isophoronediamine was calculated as 232.31 g/mol because 1 mole of carbon dioxide and 1 mole of water were added to 1 mole of isophoronediamine.

**Table 3**

| | | | | Example 6 | Example 7 | Example 8 | Example 9 | Example 10 | Example 11 | Example 12 | Example 13 | Example 14 |
|---|---|---|---|---|---|---|---|---|---|---|---|---|
| Resin composition (C) | Amine curing agent (A) | Reaction product (a2) | MXDA carbonate (g) | 1.35 | 1.35 | 1.13 | 1.13 | 1.35 | 1.58 | 1.35 | 1.13 | |
| | | | IPDA carbonate (g) | | | | | | | | | 1.16 |
| | | Amine compound unreacted with carbon dioxide | MXDA (g) | 0.68 | | | 0.85 | 0.68 | 0.51 | | | |
| | | | 1,3-BAC (g) | | 0.71 | | | | | 0.71 | | |
| | | | IPDA (g) | | | 1.06 | | | | | 1.06 | 1.28 |
| | Reaction product (a2)/ amine compound unreacted with carbon dioxide (molar ratio) | | | 60/40 | 60/40 | 50/50 | 50/50 | 60/40 | 70/30 | 60/40 | 50/50 | 40/60 |
| | Epoxy resin (B) | | jER828 (g) | 9.3 | 9.3 | 9.3 | 9.3 | 9.3 | 9.3 | 9.3 | 9.3 | 9.3 |
| Type of outer layer (Ia), (Ib) | | | | CFRP | CFRP | CFRP | Iron | Iron | Iron | Iron | Iron | Iron |
| Maximum shear stress (MPa) | | | | 11.1 | 3.6 | 9.9 | 11.5 | 11.1 | 8.7 | 9.9 | 4.9 | 3.6 |

### Examples 15 to 17, 19

A multilayer structure was prepared and its interlayer adhesiveness was evaluated in the same manner as in Example 10 except for changing the outer layers (Ia), (Ib) to the material shown in Table 4. The results are shown in Table 4.

### Example 18

### (1) Preparation of glass fiber reinforced composite material for outer layers (Ia), (Ib)

An epoxy resin composition was prepared by mixing 100 g of an epoxy resin, i.e., bisphenol A liquid epoxy resin ("DER332" made by OLIN) and 19 g of an epoxy resin curing agent, 1,3-bis(aminomethyl)cyclohexane (1,3-BAC made by Mitsubishi Gas Chemical Company, Inc., cis/trans ratio = 77/23). A 16 cm × 16 cm plain glass fabric (Woven roving "ERW320-554A" made by Central Glass Fiber Co., Ltd., thickness 0.3 mm) was impregnated with the epoxy resin composition prepared by Va-RTM at room temperature to give a prepreg. Next, the prepreg was kept in a hot air dryer at 60°C for 15 hours to thermally set the epoxy resin composition, and thus a glass fiber reinforced composite material for the outer layer with a thickness of 2 mm was prepared.

### (2) Preparation of epoxy resin composition (C) and preparation of multilayer structure and evaluation of interlayer adhesiveness

An epoxy resin composition (C) was prepared and a multilayer structure was prepared and its interlayer adhesiveness was evaluated in the same manner as in Example 10 except for changing the outer layers (Ia), (Ib) to the above glass fiber reinforced composite material. The results are shown in Table 4.

**Table 4**

| | | | | Example 10 | Example 15 | Example 16 | Example 17 | Example 18 | Example 19 |
|---|---|---|---|---|---|---|---|---|---|
| Resin composition (C) | Amine curing agent (A) | Reaction product (a2) | MXDA carbonate (g) | 1.35 | 1.35 | 1.35 | 1.35 | 1.35 | 1.35 |
| | | Amine compound unreacted with carbon dioxide | MXDA (g) | 0.68 | 0.68 | 0.68 | 0.68 | 0.68 | 0.68 |
| | Reaction product (a2)/ amine compound unreacted with carbon dioxide (molar ratio) | | | 60/40 | 60/40 | 60/40 | 60/40 | 60/40 | 60/40 |
| | Epoxy resin (B) | | jER828 (g) | 9.3 | 9.3 | 9.3 | 9.3 | 9.3 | 9.3 |
| Type of outer layer (Ia), (Ib) | | | | Iron | Copper | SUS | Al | GFRP | CFRP |
| Maximum shear stress (MPa) | | | | 11.1 | 3.0 | 2.4 | 1.9 | 6.7 | 8.2 |

### Details of the outer layers shown in Table 4 are as follows.

Copper: JIS K6850 test piece "C1020P-1/2H" made by Standard Test Piece, 25 mm × 100 mm × thickness 2 mm
SUS: JIS K6850 test piece "SUS304-2B" made by Standard Test Piece, 25 mm × 100 mm × thickness 2 mm
Al: JIS K6850 test piece "A1050P-H24" made by Standard Test Piece, 25 mm × 100 mm × thickness 2 mm
GFRP: glass fiber reinforced composite material prepared in Example 18
CFRP: carbon fiber reinforced composite material prepared in Example 5

### Industrial Applicability

The present invention provides an epoxy resin foam with improved carbon dioxide absorption capacity. The foam is also useful as a core material of a multilayer structure.

### Reference Signs List

100 Multilayer structure
1a, 1b Outer layer
2 Epoxy resin foam (core layer)

## Claims

1. An epoxy resin foam (D) obtained by foaming an epoxy resin composition (C) comprising an amine curing agent (A) and an epoxy resin (B),
wherein the amine curing agent (A) comprises a reaction product (a2) of an amine compound comprising a cyclic amine compound (a1) and carbon dioxide, and the cyclic amine compound (a1) has an amino group bonded to a primary carbon atom.

2. The epoxy resin foam according to claim 1, wherein a percentage increase of a mass of the amine compound calculated by the following equation when the amine compound is left to stand in an air environment of 23°C and 50% RH for a week is 15% by mass or more and 50% by mass or less:
percentage increase of mass of amine compound [% by mass] = 100 × amount of increase of mass of amine compound (g) / (mass of amine compound (g) + amount of increase of mass of amine compound (g)).

3. The epoxy resin foam according to claim 1 or 2, wherein an amount of carbon dioxide absorbed by the epoxy resin foam (D) per unit volume is 0.003 g/ cm³ or more.

4. The epoxy resin foam according to any one of claims 1 to 3, wherein the epoxy resin foam (D) has a density of 0.01 g/ cm³ or more and 0.80 g/ cm³ or less.

5. The epoxy resin foam according to any one of claims 1 to 4, wherein the epoxy resin (B) comprises an epoxy resin having an aromatic ring or an alicyclic structure in a molecule thereof.

6. The epoxy resin foam according to any one of claims 1 to 5, wherein the cyclic amine compound (a1) comprises a compound represented by the following formula (1): 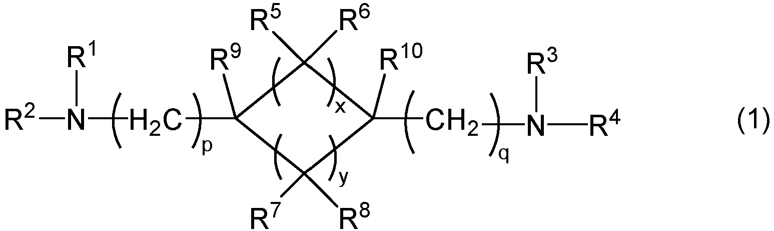 wherein R¹ to R⁴ each independently represent a hydrogen atom, or a hydrocarbon group having 1 or more and 10 or less carbon atoms and optionally having at least one substituent selected from the group consisting of an amino group, a cyano group and a phenyl group; R⁵ to R¹⁰ each independently represent a hydrogen atom or a hydrocarbon group having 1 or more and 4 or less carbon atoms; x and y each independently represent an integer of 0 or more and 6 or less, and x + y is 1 or more and 6 or less; and p and q are each independently an integer of 0 or more and 4 or less, and at least one of p and q is 1 or more.

7. The epoxy resin foam according to any one of claims 1 to 6, wherein the cyclic amine compound (a1) has 2 or more and 6 or less amino groups.

8. The epoxy resin foam according to any one of claims 1 to 7, wherein the cyclic structure of the cyclic amine compound (a1) comprises at least one selected from the group consisting of a five-membered ring and a six-membered ring.

9. The epoxy resin foam according to any one of claims 1 to 8, wherein the cyclic amine compound (a1) comprises at least one selected from the group consisting of bis(aminomethyl)cyclohexane and derivatives thereof, limonene diamine and derivatives thereof, and isophorone diamine and derivatives thereof.

10. A carbon dioxide absorbent comprising the epoxy resin foam (D) according to any one of claims 1 to 9.

11. A method for producing an epoxy resin foam, comprising a step of foaming an epoxy resin composition (C) comprising an amine curing agent (A) and an epoxy resin (B),
wherein the amine curing agent (A) comprises a reaction product (a2) of an amine compound comprising a cyclic amine compound (a1) and carbon dioxide, and the cyclic amine compound (a1) has an amino group bonded to a primary carbon atom.

12. The method for producing an epoxy resin foam according to claim 11, further comprising a step of obtaining the reaction product (a2) by contacting the amine compound with a gas having a concentration of carbon dioxide of 0.01 % by volume or more and 10% by volume or less to react the amine compound with carbon dioxide, before the step of foaming the epoxy resin composition (C).

13. The method for producing an epoxy resin foam according to claim 11 or 12, wherein a percentage increase of a mass of the amine compound calculated by the following equation when the amine compound is left to stand in an air environment of 23°C and 50% RH for a week is 15% by mass or more and 50% by mass or less:
percentage increase of mass of amine compound [% by mass] = 100 × amount of increase of mass of amine compound (g) / (mass of amine compound (g) + amount of increase of mass of amine compound (g)).

14. A multilayer structure comprising an outer layer on at least one surface of the epoxy resin foam according to any one of claims 1 to 9.

15. The multilayer structure according to claim 14, comprising an outer layer (Ia), a core layer consisting of the epoxy resin foam, and an outer layer (Ib), in the order mentioned.

16. The multilayer structure according to claim 15, wherein at least one of the outer layer (Ia) and the outer layer (Ib) is a fiber-reinforced composite material comprising a matrix resin and a reinforcing fiber.

17. A method for producing the multilayer structure according to claim 15 or 16, comprising at least one step selected from the following step (i) to step (iii):
step (i): preparing a laminate (i) by laminating the outer layer (Ia) or a precursor thereof, a foamable layer (II) comprising the epoxy resin composition (C) comprising the amine curing agent (A) and the epoxy resin (B), and the outer layer (Ib) or a precursor thereof in the order mentioned, and then foaming the foamable layer (II);
step (ii): preparing a laminate (ii) by laminating the outer layer (Ia) or a precursor thereof, the core layer, and the outer layer (Ib) or a precursor thereof in the order mentioned, and then integrating the outer layer (Ia) or a precursor thereof, the core layer, and the outer layer (Ib) or a precursor thereof; and
step (iii): preparing a laminate (iii) by laminating and integrating the outer layer (Ia) or a precursor thereof and the core layer, and then laminating and integrating the laminate (iii) and the outer layer (Ib) or a precursor thereof.
